# EUROPÄISCHE PATENTANMELDUNG

(11) **EP 1 078 940 A1**
(43) Veröffentlichungstag der Anmeldung: **28.02.2001**
(21) Anmeldenummer: 00117245.1
(22) Anmeldetag: 14.08.2000
(51) Int. Cl.: C08F 257/02, C08F 212/08, B01J 39/20

(54) **Perlpolymerisate auf Styrol, Phenolderivaten und Vernetzern und ihre Hydrolyse- und Sulfonierungsprodukte**

(30) Priorität: 25.08.1999 DE 19949465
(71) Anmelder: BAYER AG, 51368 Leverkusen (DE)
(72) Erfinder: Köhler, Burkhard, Dr., 51373 Leverkusen (DE); Seidel, Rüdiger, Dr., 51375 Leverkusen (DE); Podszun, Wolfgang, Dr., 51061 Köln (DE); Halle, Olaf, Dr., 51061 Köln (DE); Wenz, Eckhard, Dr., 50679 Köln (DE)

(57) **Zusammenfassung**

Die Erfindung betrifft Perlpolymerisate aus Styrol, Phenolestern, weiteren Monomeren und Vernetzern und ihre Hydrolyse- und Sulfonierungsprodukte, ein Verfahren zu ihrer Herstellung sowie die Verwendung der Sulfonierungsprodukte als Kationenaustauscher.

## Beschreibung

Die Erfindung betrifft Perlpolymerisate aus Styrol, Phenolderivaten, weiteren Monomeren und Vernetzern und ihre Hydrolyse- und Sulfonierungsprodukte, ein Verfahren zu ihrer Herstellung sowie die Verwendung der Sulfonierungsprodukte als Kationenaustauscher.

Kationenaustauscher werden in "Ion Exchange", 13 Kirk-Othmer Ency, Chem. Tech. Seite 678-705 (3. Ausgabe) beschrieben.

Ein Problem der sulfonsäurefunktionellen Kationenaustauscher ist die oxidative Degradation während des Gebrauchs unter typischen Bedingungen. Die Degradation führt zu einer Abnahme der Vernetzungsgrades, zu Verunreinigungen des zu entionisierenden Wassers und zu Korrosionsproblemen. Besonders die Leitfähigkeit des eluierten Wasser wird durch die Zersetzungsprodukte angehoben.

Die damit verbundenen Probleme und Lösungsansätze werden in der US-A 53 02 623 und der EP-A 0 366 258 beschrieben.

In der US-A 53 02 623 werden Copolymerisate beschrieben, die para-substituierte Styrole statt Styrol enthalten. Unbefriedigend bei dieser Massnahme ist, dass das technisch sehr gut verfügbare Styrol ganz oder weitgehend durch p-Alkylstyrole ersetzt werden muss.

In der EP-A 0 366 258 werden den Kationenaustauschern phenolische Antioxidantien zugesetzt. Hierbei besteht der Nachteil, dass solche Antioxidantien selbst im Laufe der Zeit eluierbar sind.

Daher bestand die Aufgabe, oxidativ stabile Ionenaustauscher herzustellen, die im wesentlichen aus Styrol bestehen und die keine niedermolekularen Zusätze enthalten.

Überraschenderweise wurde gefunden, dass die Sulfonierungsprodukte von Perlpolymerisaten aus Styrol, höchstens 3 Gew.-% 4-Acetoxystyrol, Acrylnitril und Divinylbenzol eine deutlich geringere Leitfähigkeit des eluierten Wassers ergeben, als die Sulfonierungsprodukte 4-Acetoxystyrol-freier Perlpolymerisate.

Gegenstand der Erfindung ist ein Verfahren zur Herstellung von Perlpolymerisaten durch
i) Ausbilden einer Suspension von Saatpolymerisat und Monomergemisch in einer kontinuierlichen wässrigen Phase, wobei das Saatpolymerisat selber durch Verdüsen von Monomergemisch aus den Komponenten A) und B) oder A) und B) und C) in einer wässrigen Phase und anschließender Polymerisation hergestellt wird, oder einer hetero- oder homodispersen Suspension von Monomergemisch durch Rühren oder Verdüsen in einer wässrigen Phase,
ii) Polymerisieren des Monomergemisches im Saatpolymerisat oder der hetero- oder homodispersen Suspension zu einem Copolymerisat und
iii) Funktionalisieren des gebildeten Copolymerisats durch Sulfonierung, dadurch gekennzeichnet, dass man als Monomerengemisch
   A) 67 bis 99,45 Gew.-%, vorzugsweise 79 bis 95,9 Gew.-% Styrol,
   B) 0,5 bis 20 Gew.-%, vorzugsweise 2 bis 12 Gew.-% Vernetzer, vorzugsweise Divinylbenzol, das als Isomerengemisch vorliegen kann und bis zu 50 Gew.-% Isomere von Ethylstyrolen und bis zu 10 Gew.-% Isomere von Diethylbenzolen enthalten kann,
   C) 0,05 bis 3 Gew.-%, vorzugsweise 0,1 bis 1 Gew.-% Phenolderivate, insbesondere Phenolester oder Phenolether der allgemeinen Formel (I) 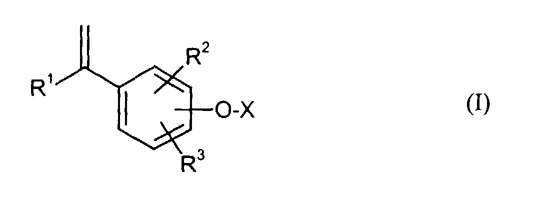 worin
      - R¹: für Wasserstoff oder Methyl steht,
      - X: für einen um ein Sauerstoffatom verminderten organischen oder anorganischen Säurerest, oder für einen tert.-Alkylrest mit 3 bis 10 Kohlenstoffatomen, bevorzugt für Alkylreste mit 4 bis 5 Kohlenstoffatomen steht,
      - R² und R³: unabhängig voneinander für -O-X stehen oder für Wasserstoff oder Methyl stehen, vorzugsweise für Wasserstoff stehen,
      und bezogen auf 100 Gew.-Teile der Mischung aus A) + B) oder A) + B) + C) 0,1 bis 1,1 Gew.-Teile Polymerisationsinitiatoren einsetzt.

Gegebenenfalls kann nach Verfahrensschritt i) das Saatpolymerisat in einem Monomerengemisch aus Phenolderivat, Vernetzer und Radikalstarter gequollen werden.

Ein weiterer Gegenstand der Erfindung sind die Perlpolymerisate, die durch saure oder alkalische Hydrolyse oder Sulfonierung, vorzugsweise Sulfonierung des Copolymerisats aus Verfahrensschritt ii) hergestellt werden.

Ein weiterer Gegenstand der Erfindung ist die Verwendung der erfindungsgemäßen Sulfonierungs- oder Hydrolyseprodukte als Kationenaustauscher.

Die Herstellung der Perlpolymerisate erfolgt in wässriger Suspension nach ein- oder mehrstufigen Verfahren, wie sie in Helfferich, Ion Exchange, McGraw-Hill Book Co., Inc., Seite 26-47 (1962), in Polymer Processes, Interscience Publishers, Inc. New York, Seite 69 bis 109, in der EP 0 098 130 B1, in der EP 0 101 943 B1, in der DE-A 198 52 667.9 und der DE-A 198 20 049.0 beschrieben sind. Der Inhalt der DE-A 198 52667.9 wird von der vorliegenden Beschreibung mit umfasst.

Verfahren zur Sulfonierung werden in Helfferich, Ion Exchange, McGraw-Hill Book Co., Inc., Seite 26 bis 47 (1962), in der EP-A 0 826 704 und in der DE-A 198 52 667.8 beschrieben.

Bei den Resten X handelt es sich bevorzugt um aliphatische oder aromatische Säurereste mit 1 bis 7 Kohlenstoffatomen, besonders bevorzugt um Acetyl, Propionyl, Butyryl, Benzoyl, Formyl, Alkoxycarbonyl, Aralkoxycarbonyl oder Aryloxycarbonyl, ganz besonders bevorzugt um Acetyl, Propionyl, Butyryl, Benzoyl, Formyl, Methoxycarbonyl, tert.-Butyloxycarbonyl oder Benzyl-oxy-carbonyl oder um Silicium-haltige Reste, bevorzugt um Trimethylsilyl oder um Schwefel-haltige Reste, bevorzugt Phenylsulfonyl, 4-Methylphenylsulfonyl oder Methylsulfonyl.

Komponenten B) im Sinne der Erfindung sind Di- oder Trialkenylbenzole, wie z.B. die Isomeren des Divinylbenzols, der Trivinylbenzole, der Diisopropenylbenzole und der Triisopropenylbenzole.

Beispiele für die Komponente C) sind beispielsweise 4-Acetoxystyrol, 4-Trimethylsilyloxy-1-isopropenylbenzol, 4-Vinylphenyltosylat oder Kohlensäure-tert.-butyl-4-isopropenylphenylester.

Die Komponente C) kann homogen im gesamten Perlpolymerisat, oder bei Saat-Feed-Prozessen in der Saat und/oder im Feed zugesetzt werden.

Als weiteres Monomer können gegebenenfalls Verbindungen der Reihe Vinylnaphthalin, Ethylstyrol, alpha-Methylstyrol, Chlorstyrole, Acrylsäure, Methacrylsäure, Acrylsäure-C₁-C₈-alkylester, Methacrylsäure-C₁-C₈-Alkylester, Acrylnitril, Methacrylnitril, Acrylamid, Methacrylamid, Vinylchlorid, Vinylidenchlorid oder Vinylacetat eingesetzt werden. Diese weiteren Monomere werden in Konzentrationen von 0 bis 15 Gew.-%, bevorzugt von 2 bis 8 Gew.-% eingesetzt. In einer besonders geeigneten Ausführungsform werden 4 Gew.-% Acrylnitril eingesetzt.

Polymerisationsinitiatoren im Sinne der Erfindung sind die üblichen Initiatoren, die bei der radikalischen Polymerisation eingesetzt werden. Bevorzugt sind Initiatoren mit geringer Wasserlöslichkeit. Geeignete Initiatoren sind Azoverbindungen, wie z.B. Azobisisobutyronitril, Perester oder Percarbonate.

Die erfindungsgemäßen Perlpolymerisate eignen sich als Edukte zur Herstellung von Ionenaustauschern, vorzugsweise Kationenaustauschern. Die erfindungsgemäßen Sulfonierungsprodukte eignen sich als Kationenaustauscher und sind Produkten nach dem Stand der Technik überlegen.

Die erfindungsgemäßen Kationenaustauscher zeigen eine deutliche Überlegenheit im Hinblick auf oxidative Degradation gegenüber Kationenaustauschern, die gemäß dem Stand der Technik EP-A 0 366 258 oder US-A 5 302 623 hergestellt wurden.

### Beispiele

Messung der Leitfähigkeit im Eluat und der Menge an hochmolekularer Polystyrolsulfonsäure

In eine auf 70°C temperierte Glassäule von 60 cm Länge und 2 cm Durchmesser werden 100 ml nutschfeuchter Kationenaustauscher in der H-Form eingefüllt. Durch die Säule werden von oben nach unten 480 ml entionisiertes Wasser mit einer Durchflussgeschwindigkeit von 20 ml/h (0,2 Bettvolumen/h) geleitet. Vom Eluat wird die Leitfähigkeit in µS/cm gemessen. Ferner wird durch Gelpermeationschromatographie unter Verwendung von Eichsubstanzen der Gehalt an hochmolekularen Poly-styrolsulfonsäuren (Mw >4000) in mg/l gemessen.

### Beispiel 1 (erfindungsgemäß)

### a) Herstellung der Saat

Man verfährt, wie in DE-A 198 52 667.9, Beispiel 2a beschrieben.

### b) Herstellung des Perlpolymerisats

Man verfährt, wie in DE-A 198 52 667.9, Beispiel 2b beschrieben, wobei als Monomerengemisch 700,7 g Styrol, 48,3 g Acrylnitril, 119,2 g Divinylbenzol (80,6 %; Rest Ethylbenzol, Isomerengemisch) und 30 g (2,5 Gew.-% des Perlpolymerisats) 4-Acetoxystyrol eingesetzt wird. Man erhält 1168 g eines Perlpolymerisats.

### c) Herstellung eines Kationenaustauschers durch Sulfonierung

Man verfährt, wie in DE-A 198 52 667.9, Beispiel 2c beschrieben.

Die Leitfähigkeit beträgt 82,9 der Gehalt an hochmolekularer Polystyrolsulfonsäure <0,2.

### Beispiel 2 (erfindungsgemäß)

Man verfährt, wie in Beispiel 1 beschrieben, wobei 718,7 g Styrol, 48,3 g Acrylnitril, 119,2 g Divinylbenzol und 12 g (1 Gew.-%) 4-Acetoxystyrol eingesetzt werden.

Die Leitfähigkeit beträgt 84,8, der Gehalt an hochmolekularen Polystyrolsulfonsäuren 0,2.

### Beispiel 3 (erfindungsgemäß)

Man verfährt, wie in Beispiel 1 beschrieben, wobei 729,5 g Styrol, 48,3 g Acrylnitril, 119,2 g Divinylbenzol und 1,2 g (0,1 Gew.-%) 4-Acetoxystyrol eingesetzt werden.

Die Leitfähigkeit beträgt 85,3, der Gehalt an hochmolekularen Polystyrolsulfonsäuren 0,3.

### Beispiel 4 (Vergleich)

Man verfährt, wie in Beispiel 1 beschrieben, wobei 730,7 g Styrol, 48,3 g Acrylnitril und 119,2 g Divinylbenzol eingesetzt werden.

Die Leitfähigkeit beträgt 104,9, der Gehalt an hochmolekularen Polystyrolsulfonsäuren 1,4.

## Patentansprüche

1. Verfahren zur Herstellung von Perlpolymerisaten durch
i) Ausbilden einer Suspension von Saatpolymerisat und Monomergemisch in einer kontinuierlichen wässrigen Phase, wobei das Saatpolymerisat selber durch Verdüsen von Monomergemisch aus den Komponenten A) und B) oder A) und B) und C) in einer wässrigen Phase und anschließender Polymerisation hergestellt wird, oder einer hetero- oder homodispersen Suspension von Monomergemisch durch Rühren oder Verdüsen in einer wässrigen Phase,
ii) Polymerisieren des Monomergemisches im Saatpolymerisat oder der hetero- oder homodispersen Suspension zu einem Copolymerisat und
iii) Funktionalisieren des gebildeten Copolymerisats durch Sulfonierung, dadurch gekennzeichnet, dass man als Monomerengemisch
A) 67 bis 99,45 Gew.-% Styrol,
B) 0,05 bis 20 Gew.-% Vernetzer und
C) 0,05 bis 3 Gew.-% Phenolderivate,
und bezogen auf 100 Gew.-Teile der Mischung aus A) + B) oder A) + B) + C) 0,1 bis 1,1 Gew.-Teile Polymerisationsinitiator einsetzt.

2. Verfahren gemäß Anspruch 1, dadurch gekennzeichnet, dass als Phenolderivate Phenolester oder Phenolether der Formel (I) 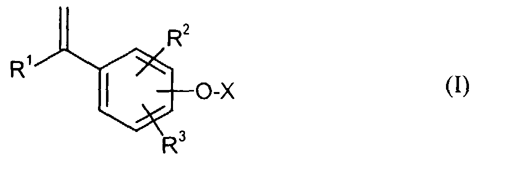 worin
R¹ für Wasserstoff oder Methyl steht,
X für einen um ein Sauerstoffatom verminderten organischen oder anorganischen Säurerest, oder für einen tert.-Alkylrest mit 3 bis 10 Kohlenstoffatomen steht, und
R² und R³ unabhängig voneinander für Methyl, Wasserstoff oder einen Rest -O-X stehen,
eingesetzt werden.

3. Verfahren gemäß Anspruch 2, dadurch gekennzeichnet, dass in der Formel (I)
X für aliphatische oder aromatische Acylreste mit 1 bis 7 Kohlenstoffatomen oder siliciumhaltige Reste oder schwefelhaltige Reste steht.

4. Verfahren gemäß Anspruch 1, dadurch gekennzeichnet, dass als Vernetzer Di- oder Trialkenylbenzole eingesetzt werden.

5. Verfahren gemäß Anspruch 1, dadurch gekennzeichnet, dass als weitere Monomere Vinylnaphthalin, Ethylstyrol, alpha-Methylstyrol, Chlorstyrole, Acrylsäure, Methacrylsäure, Acrylsäure-C₁-C₈-Alkylester, Methacrylsäure-C₁-C₈-Alkylester, Acrylnitril, Methacrylnitril, Acrylamid, Methacrylamid, Vinyl-chlorid, Vinylidenchlorid oder Vinylacetat eingesetzt werden.

6. Verfahren gemäß Anspruch 1, dadurch gekennzeichnet, dass als Polymerisationsinitiator Azobisisobutyronitril, Perester oder Percarbonate eingesetzt werden.

7. Copolymerisate hergestellt nach dem Verfahren der Suspensionspolymerisation gemäß der Verfahrensschritte i) und ii) in Anspruch 1.

8. Perlpolymerisate, dadurch gekennzeichnet, dass das Copolymerisat aus Verfahrensschritt ii) in Verfahrensschritt iii) gemäß Anspruch 1 sulfoniert oder sauer oder alkalisch hydrolysiert wird.

9. Verwendung der Perlpolymerisate gemäß Anspruch 8 zur Herstellung von Kationenaustauschern.

10. Verfahren zur Verhinderung der Degradation von Kationenaustauschern durch Einsatz von Perlpolymerisaten gemäß Anspruch 7.

11. Verfahren zur Verhinderung von Korrosion durch entionisiertes Wasser, dadurch gekennzeichnet, dass man Kationenaustauscher einsetzt die aus Perlpolymerisaten gemäß Anspruch 8 hergestellt werden.

12. Kationenaustauscher hergestellt aus den Perlpolymerisaten gemäß Anspruch 8.
